# EUROPEAN PATENT APPLICATION

(11) **EP 4 571 872 A1**
(43) Date of publication of application: **18.06.2025**
(21) Application number: 24218064.4
(22) Date of filing: 06.12.2024
(51) Int. Cl.: H01M 4/131, H01M 4/1391, H01M 4/36, H01M 4/505, H01M 4/525, H01M 10/0525

(54) **POSITIVE ELECTRODE ACTIVE MATERIALS, PREPARATION METHODS THEREOF, POSITIVE ELECTRODES, AND RECHARGEABLE LITHIUM BATTERIES**

(30) Priority: 08.12.2023 KR 20230178035
(71) Applicant: SAMSUNG SDI CO., LTD., Yongin-si, Gyeonggi-do 17084 (KR)
(72) Inventor: KANG, Seok Mun, 17084 Yongin-si (KR); CHOO, Sung Ho, 17084 Yongin-si (KR); KONG, Youngsun, 17084 Yongin-si (KR); KIM, Young-Ki, 17084 Yongin-si (KR); DOO, Sungwook, 17084 Yongin-si (KR); JUN, Dowook, 17084 Yongin-si (KR); YOON, Jaesang, 17084 Yongin-si (KR); KANG, Gwiwoon, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

A positive electrode active material, a method of preparing the same, and a positive electrode and rechargeable lithium battery including the same, the positive electrode active material including core particles including a layered lithium nickel-manganese-based composite oxide; and a coating layer located on the surface of the core particle and containing aluminium and zinc.

## Description

### BACKGROUND

### 1. Field

Embodiments of the present disclosure described herein are related to positive electrode active materials, methods of preparation of the positive electrode active materials, positive electrodes including the positive electrode active materials, and rechargeable lithium batteries including the positive electrodes.

### 2. Description of the Related Art

In a portable information device such as a cell phone, a laptop, smart phone, and/or the like and/or an electric vehicle, it is known to use a rechargeable lithium battery having relatively high energy density and easy portability as a driving power source. Recently, research has been explored or conducted using a rechargeable lithium battery with high energy density as a driving power source for hybrid or electric vehicles or as a power storage power source for energy storage systems or power walls.

Various positive electrode active materials have been used for rechargeable lithium batteries. For example, lithium nickel-based oxide, lithium nickel-manganese-cobalt-based composite oxide, lithium nickel-cobalt-aluminium-based composite oxide, and lithium cobalt-based oxide have been used as positive electrode active materials. However, while demands for large-sized, high-capacity, or high-energy-density rechargeable lithium batteries have increased, the supply of positive electrode active materials containing cobalt, a rare metal, is expected to be severely insufficient. For example, because cobalt is expensive and there are not many remaining reserves, there is a need or desire to develop positive electrode active materials that exclude cobalt or reduce its content (e.g., amount).

### SUMMARY

One or more embodiments of the invention are directed toward a positive electrode active material including a layered lithium nickel-manganese-based composite oxide, which includes an optimal or suitable coating layer to improve the performance of rechargeable lithium batteries at high temperature and high voltage, capacity characteristics, initial charge/discharge efficiency, and high-temperature cycle-life characteristics.

One or more embodiments of the invention is/are directed toward a positive electrode active material that may maximize or increase capacity, while minimizing or reducing a production cost, to ensure long cycle-life characteristics and improve high-voltage characteristics and high-temperature characteristics. When the positive electrode active material is applied to a rechargeable lithium battery, high initial charge/discharge capacity and efficiency may be achieved under high-voltage operating conditions, and long cycle-life characteristics may be realized under high-voltage and high-temperature conditions.

Additional aspects of the invention will be set forth in part in the description which follows, and in part, will be apparent from the description, or may be learned by practice of the presented embodiments of the present disclosure.

In one or more embodiments, a positive electrode active material includes a core particle including a layered lithium nickel-manganese-based composite oxide; and a coating layer located on a surface of the core particle and containing aluminium and zinc.

In one or more embodiments, a method of preparing a positive electrode active material includes: preparing core particles including a layered lithium nickel-manganese-based composite oxide; adding and mixing an aluminium raw material and a zinc raw material to an aqueous solvent to prepare a coating solution; adding and mixing the core particles to the coating solution to prepare a mixed solution; and removing the aqueous solvent from the mixed solution, drying the resulting product, and performing heat treatment to obtain a positive electrode active material.

In one or more embodiments, a positive electrode includes a positive electrode current collector and a positive electrode active material layer on the positive electrode current collector, wherein the positive electrode active material layer includes the aforementioned positive electrode active material.

In one or more embodiments, a rechargeable lithium battery includes the aforementioned positive electrode, a negative electrode, and an electrolyte.

At least some of the above and other features of the invention are set out in the claims.

### BRIEF DESCRIPTION OF THE DRAWINGS

FIGS. 1-4 are schematic diagrams each showing a rechargeable lithium battery according to one or more embodiments.
FIGS. 5 and 6 are scanning electron microscope (SEM) images of the surface of the final positive electrode active material prepared in Example 1.
FIGS. 7 and 8 are SEM images of the surface of the final positive electrode active material prepared in Example 2.
FIGS. 9 and 10 are SEM images of the surface of the final positive electrode active material prepared in Comparative Example 1.
FIGS. 11 and 12 are SEM images of the surface of the final positive electrode active material prepared in Comparative Example 2.
FIGS. 13 and 14 are SEM images of the surface of the final positive electrode active material prepared in Comparative Example 3.
FIGS. 15 and 16 are X-ray photoelectron spectroscopy (XPS) analysis results for the final positive electrode active material prepared in Example 1.
FIGS. 17 and 18 show the results of XPS analysis of the positive electrode active material before the second heat treatment in Example 1.

### DETAILED DESCRIPTION

Hereinafter, specific embodiments will be described in more detail so that those of ordinary skill in the art can easily implement them. However, this disclosure may be embodied in many different forms and is not construed as being limited to the example embodiments set forth herein.

As used herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The terminology used herein is used to describe embodiments only, and is not intended to limit the present disclosure. The singular expression includes the plural expression unless the context clearly dictates otherwise.

As used herein, "combination thereof" refers to a mixture, a laminate, a composite, a copolymer, an alloy, a blend, a reaction product, and/or the like of the constituents.

Herein, it should be understood that terms such as "comprises," "includes," or "have" are intended to designate the presence of an embodied aspect, number, step (e.g., act or task), element, and/or a (e.g., any suitable) combination thereof, but it does not preclude the possibility of the presence or addition of one or more other features, number, step (e.g., act or task), element, and/or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

"Layer" herein includes not only a shape formed on the whole surface if (e.g., when) viewed from a plan view, but also a shape formed on a partial surface.

The average particle diameter may be measured by a method suitable to those skilled in the art, for example, by a particle size analyzer, or by a transmission electron microscopic image or a scanning electron microscopic image. In one or more embodiments, it is possible to obtain an average particle diameter value using a dynamic light scattering method, performing data analysis, counting the number of particles for each particle size range, and calculating from this. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, ± 20%, ± 10%, ± 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

In the context of the present application and unless otherwise defined, the terms "use," "using," and "used" may be considered synonymous with the terms "utilize," "utilizing," and "utilized," respectively. Further, the use of "may" when describing embodiments of the present invention refers to "one or more embodiments of the present invention."

Hereinbelow, a positive electrode active material for a rechargeable lithium battery, a rechargeable lithium battery including the positive electrode active material, and a method of preparing a positive electrode active material for a rechargeable lithium battery according to one or more embodiments will be described in greater detail.

### Positive Electrode Active Material

In one or more embodiments, a positive electrode active material includes core particles including a layered lithium nickel-manganese-based composite oxide; and a coating layer located on a surface of the core particles and containing aluminium and zinc.

As the price of cobalt, a rare metal, has risen, there is a demand or desire for the development of positive electrode active materials that exclude cobalt or reduce its content (e.g., amount). A positive electrode active material having an olivine crystal structure, such as lithium iron phosphate (LFP), lithium manganese phosphate (LMP), lithium manganese iron phosphate (LMFP), and/or the like, or a spinel crystal structure, such as lithium manganese oxide (LMO) and/or the like, is limited in its ability to perform at high capacity due to a small available lithium amount within the structure. The layered lithium nickel-manganese-based positive electrode active material has excellent or suitable capacity and efficiency characteristics due to the high available lithium capacity in the structure, making it suitable as a material for high-capacity batteries. However, as cobalt, which plays a key role in the layered structure, is removed, structural stability decreases, resistance increases, and it becomes more difficult to secure long cycle-life characteristics. In addition, the layered lithium nickel-manganese positive electrode active material, from which cobalt is excluded, may instead have a problem of accelerated side reactions with an electrolyte under high-voltage and high-temperature conditions, resultantly increasing gas generation and deteriorating cycle-life characteristics.

In one or more embodiments, a coating layer including both (e.g., simultaneously) aluminium and zinc is included on a surface of a layered lithium nickel-manganese-based positive electrode active material, thereby strengthening the particle surface and forming a coating layer with a structural three-dimensional (3D) lithium channel, thereby improving high-voltage, high-temperature cycle-life characteristics and initial charging and discharging efficiency.

### Core Particles

The core particles include the layered lithium nickel-manganese-based composite oxide.

A nickel content (e.g., amount) may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol%, based on 100 mol% of a total metal excluding lithium in the layered lithium nickel-manganese-based composite oxide. If the nickel content (e.g., amount) satisfies the above ranges, high capacity may be achieved and structural stability may be increased even if the cobalt content (e.g., amount) is reduced. The nickel is contained in the core particles, but may move to some of the coating layers during the coating process, and therefore, the nickel content (e.g., amount) may refer to a nickel content (e.g., amount) contained in the entire positive electrode active material.

A manganese content (e.g., amount) may be for example, greater than or equal to about 10 mol%, for example about 10 mol% to about 40 mol%, about 15 mol% to about 35 mol%, about 15 mol% to about 30 mol%, or about 20 mol% to about 30% based on 100 mol% of a total metal excluding lithium in the layered lithium nickel-manganese-based composite oxide. If the manganese content (e.g., amount) satisfies the above range, the positive electrode active material may improve structural stability while realizing high capacity. The manganese is contained in the core particles, but may move to some of the coating layers during the coating process, and therefore, the manganese content (e.g., amount) may refer to a manganese content (e.g., amount) contained in the entire positive electrode active material.

The layered lithium nickel-manganese-based composite oxide may be a lithium nickel-manganese-aluminium-based composite oxide that further includes aluminium in addition to nickel and manganese. If the layered lithium nickel-manganese-based composite oxide contains aluminium, it is advantageous to maintain a stable layered structure even if cobalt is excluded from the structure. An aluminium content (e.g., amount) based on 100 mol% of a total metal excluding lithium of the layered lithium nickel-manganese-based composite oxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol%. Herein, the aluminium content (e.g., amount) refers to a content (e.g., amount) of aluminium present in the core particles. If the aluminium content (e.g., amount) satisfies the above ranges, a stable layered structure may be maintained even if cobalt is excluded from the core particles, the problem of structure collapse due to charging and discharging may be suppressed or reduced, and long cycle-life characteristics of the positive electrode active material may be realized.

According to one or more embodiments, a concentration of aluminium within the core particle may be substantially uniform. For example, there may not be a concentration gradient of aluminium from the centre to the surface within the core particle, or the aluminium concentration in an internal portion of the core particle may be neither higher nor lower than in the external portion, and the aluminium within the core particle may be evenly distributed. This may be a structure obtained by using an aluminium raw material during precursor production without additional doping of aluminium during the synthesis of the core particles and thereby synthesizing a composite oxide using nickel-manganese-aluminium-based hydroxide as a precursor. The core particles may include (e.g., may be in a form of) a secondary particle in which a plurality of primary particles are agglomerated, and the aluminium content (e.g., amount) inside a primary particle may be the same or similar regardless of the location of the primary particle. For example, if a primary particle is selected at a random position in the cross-section of a secondary particle and the aluminium content (e.g., amount) is measured inside the primary particle rather than at its interface, regardless of the location of the primary particle, that is, whether the primary particle is close to the centre of the secondary particle or close to the surface, the aluminium content (e.g., amount) may be the same/similar/substantially uniform. In this structure, a stable layered structure can be maintained even if cobalt is absent or is present in a very small amount, and aluminium by-products or aluminium aggregates are not generated, so that the capacity, efficiency, and cycle-life characteristics of the positive electrode active material can be improved at the same time.

The layered lithium nickel-manganese-based composite oxide may be represented by Chemical Formula 1:

Chemical Formula 1 Liₐ₁Niₓ₁Mn_{y1}Al_{z1}M¹w₁O_{2-b1}X_{b1}

In Chemical Formula 1, 0.9≤a1≤1.8, 0.6≤x1≤0.8, 0.1≤y1≤0.4, 0≤z1≤0.03, 0 ≤w1≤0.3, 0.9≤x1+y1+z1+w1 ≤1.1, and 0≤b1≤0.1, M¹ is one or more elements selected from among B, Ba, Ca, Ce, Cr, Fe, Mg, Mo, Nb, Si, Sn, Sr, Ti, V, W, Y, Zr, and Zn, and X is one or more elements selected from among F, P, and S.

In Chemical Formula 1, for example, 0.9≤a1≤1.5, or 0.9≤a1≤1.2. In embodiments, Chemical Formula 1 may contain aluminium, i.e. z1≠0, in which case 0.6 ≤x1≤0.8, 0.1≤y1≤0.39, 0.01≤z1≤0.03, and 0≤w1≤0.29 may be satisfied, or for example, 0.6≤x1≤0.8, 0.1≤y1≤0.39, 0.01≤z1≤0.03, and 0≤w1≤0.29.

In Chemical Formula 1, for example, 0.6≤x1≤0.79, 0.6≤x1≤0.78, 0.6≤x1≤ 0.75, 0.65≤x1≤0.8, or 0.7≤x1≤0.79, 0.1≤y1≤0.35, 0.1≤y1≤0.30, 0.1≤y1≤0.29, 0.15≤ y1≤0.39, or 0.2≤y1≤0.3, 0.01≤z1≤0.025, 0.01≤z1≤0.02, or 0.01≤z1≤0.019, and 0≤w1 ≤0.28, 0≤w1 ≤0.27, 0≤w1 ≤0.26, 0≤w1 ≤0.25, 0≤w1 ≤0.24, 0≤w1 ≤0.23, 0≤w1 ≤0.22, 0 ≤w1≤0.21, 0≤w1≤0.2, 0≤w1≤0.15, 0≤w1 ≤0.1, or 0≤w1 ≤0.09.

For example, the layered lithium nickel-manganese-based composite oxide of the core particles may be a cobalt-free compound that does not contain cobalt or contains a very small amount, and has a cobalt content (e.g., amount) of about 0 mol% to about 0.01 mol% based on 100 mol% of a total metal excluding lithium in the layered lithium nickel-manganese-based composite oxide.

The core particles may include (e.g., may be in the form of) secondary particles made by agglomerating a plurality of primary particles. The secondary particles may be spherical, elliptical, polyhedral, or irregular in shape and the primary particles may be spherical, elliptical, plate-shaped, and/or a (e.g., any suitable) combination thereof.

The core particle is susceptible to chemical attacks from components in an electrolyte, if (e.g., when) a battery is operated under high-voltage or high-temperature conditions, and thus may have lots of side reactions with the electrolyte, resulting in increasing an amount of gas generation and thereby, deteriorating battery cycle-life and safety. However, these problems may be solved by introducing a coating layer according to one or more embodiments, which will be described in more detail later, thereinto.

### Coating Layer

The positive electrode active material according to one or more embodiments includes a coating layer located on a surface of the core particle and containing aluminium and zinc.

The positive electrode active material according to one or more embodiments may have an aluminium content (e.g., amount) of about 5 at% (atomic percent) to about 35 at%, for example, about 5 at% to about 30 at%, about 5 at% to about 25 at%, or about 10 at% to about 20 at% based on 100 at% of the total components on the surface of the positive electrode active material measured by XPS. In addition, the zinc content (e.g., amount) based on 100 at% of the total components on the surface of the positive electrode active material measured by XPS may be about 0.1 at% to about 3.0 at%, for example, about 0.3 at% to about 2.5 at%, or about 0.5 at% to about 2.0 at%. These may only refer to contents of aluminium and zinc contained in the coating layer. If the aluminium and zinc contents on the surface of the positive electrode active material particle satisfies the above ranges, it is possible to form a substantially uniform and thin coating layer, such that a resistance of the positive electrode active material does not increase, and side reactions with the electrolyte are effectively suppressed or reduced, resulting in improving cycle-life characteristics of rechargeable lithium batteries under high-voltage and high-temperature conditions.

The aluminium content (e.g., amount) in the coating layer may be about 0.5 mol% to about 1.5 mol%, for example, about 0.5 mol% to about 1.4 mol%, about 0.6 mol% to about 1.4 mol%, or about 0.7 mol% to about 1.3 mol% based on 100 mol% of a total metal excluding lithium in the positive electrode active material. The aluminium content (e.g., amount) of the coating layer may refer only to a content (e.g., amount) of aluminium contained in the coating layer, regardless of the aluminium contained in the core particles.

In addition, the zinc content (e.g., amount) in the coating layer may be about 0.01 mol% to about 1.5 mol%, for example, about 0.05 mol% to about 1.0 mol%, about 0.1 mol% to about 1.0 mol%, about 0.1 mol% to about 0.5 mol%, or about 0.1 mol% to about 0.4 mol% based on 100 mol% of a total metal excluding lithium in the positive electrode active material. The zinc content (e.g., amount) of the coating layer may refer only to a content (e.g., amount) of zinc contained in the coating layer, regardless of the zinc contained in the core particles.

In addition, a total amount of aluminium and zinc in the coating layer may be about 0.51 mol% to about 3.0 mol%, for example, about 0.51 mol% to about 1.5 mol% based on 100 mol% of a total metal excluding lithium in the positive electrode active material. These may only refer to contents of aluminium and zinc contained in the coating layer, regardless of the aluminium and zinc that are contained or may be contained in the core particles. The total metal excluding lithium in the entire positive electrode active material, which is the standard for the above content (e.g., amount) ranges, may refer to a content (e.g., amount) of total metal excluding lithium present in the entire positive electrode active material particles, not on the surface of the positive electrode active material.

The contents of aluminium and zinc in the coating layer of the entire positive electrode active material may be measured, for example, through SEM-EDS analysis of the surface or cross-section of the positive electrode active material. If the aluminium and zinc contents in the coating layer satisfy the ranges, the coating layer may have a substantially uniform and thin thickness, which may not increase resistance of the positive electrode active material and effectively suppress or reduce a side reaction with the electrolyte and thereby, improve cycle-life characteristics of a rechargeable lithium battery under high-voltage and high-temperature conditions. For example, if the aluminium and zinc contents of the coating layer are excessive, a substantially uniform coating layer may not be formed or resistance may increase, which may reduce charge/discharge efficiency and cycle-life characteristics, and if the aluminium and zinc contents of the coating layer is too small, a coating layer of an appropriate or suitable thickness is not formed and an effect of suppressing or reducing side reactions with the electrolyte may be reduced.

On the surface of the positive electrode active material, a ratio (Al/Zn) of aluminium content (e.g., amount) to zinc content (e.g., amount) may satisfy greater than or equal to about 2, for example, about 2 to about 50, about 2 to about 40, about 2 to about 30, about 2 to about 20, about 2 to about 10, or about 3 to about 7. If the above ratio is satisfied, the initial charge/discharge capacity, initial charge/discharge efficiency, and cycle-life characteristics at high temperature and high voltage of the rechargeable lithium battery may be improved at the same time.

The coating layer according to one or more embodiments may be in the form of a film that continuously surrounds the surface of the core particle, or may be in the form of a shell that surrounds the entire surface of the core particle. This is distinct from a structure in which only a portion of the surface of the core particle is partially coated. According to one or more embodiments, the coating layer may be formed to entirely cover the surface of the core particle and may be formed to be very thin and substantially uniform in thickness, and therefore the positive electrode active material does not increase resistance or decrease capacity, improves structural stability, effectively suppresses side reactions with electrolytes, reduces the amount of gas generated under high-voltage and high-temperature conditions, and achieves long cycle-life characteristics.

Within the coating layer according to one or more embodiments, aluminium and zinc may be mixed together, and zinc may be distributed in part or all of the area where aluminium is distributed.

The coating layer according to one or more embodiments may have a thickness of about 5 nm to about 200 nm, for example about 5 nm to about 150 nm, about 5 nm to about 100 nm, about 5 nm to about 80 nm, about 5 nm to about 50 nm, or about 10 nm to about 50 nm. If the coating layer satisfies the thickness ranges, the structural stability of the positive electrode active material may be improved without increasing resistance or reducing capacity due to the coating, and the side reaction with the electrolyte may be effectively suppressed or reduced. The thickness of the coating layer may be measured through, for example, SEM, transmission electron microscopy (TEM), time-of-flight secondary ion mass spectrometry (TOF-SIMS), XPS, or energy-dispersive x-ray spectroscopy (EDS) analysis, and for example, may be measured through EDS line profile analysis of the cross-section of the positive electrode active material.

The coating layer according to one or more embodiments is characterized by being thin and substantially uniform in thickness, at the level of tens to hundreds of nanometers. For example, the deviation in coating layer thickness in one positive electrode active material particle may be less than or equal to about 20 %, less than or equal to about 18 %, or less than or equal to about 15 %. Herein, the deviation in coating layer thickness refers to the coating layer thickness within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one data and the arithmetic mean value by the arithmetic mean and multiplying by 100. The fact that the deviation or standard deviation of the coating layer thickness satisfies the above ranges refers to a coating layer of substantially uniform thickness is formed in a good or suitable film on the surface of the positive electrode active material particle. Accordingly, the structural stability of the positive electrode active material is improved, side reactions with the electrolyte may be effectively suppressed or reduced, and the increase in resistance or decrease in capacity due to coating may be minimized or reduced.

In one or more embodiments, the coating layer may further contain nickel, manganese, and/or a (e.g., any suitable) combination thereof in addition to aluminium and zinc. The nickel and manganese may have been contained in the core particles and may have been introduced during the coating layer formation process, and their contents are not particularly limited. The coating layer according to one or more embodiments essentially contains aluminium and zinc while optionally containing nickel and manganese, and is formed to be thin and substantially uniform in thickness, thereby improving the high-voltage characteristics of the positive electrode active material and improving the cycle-life characteristics.

Additionally, the coating layer may further contain sulfur in addition to aluminium and zinc. The sulfur may be introduced during the process of adding aluminium sulfate of the aluminium raw material or zinc sulfate of the zinc raw material to form a coating layer, and its content (e.g., amount) is not particularly limited. The coating layer according to one or more embodiments essentially contains aluminium and zinc while optionally containing sulfur, and can improve the high-voltage characteristics and cycle-life characteristics of the positive electrode active material.

An average particle diameter (D₅₀) of the positive electrode active material (in a form of particles) according to one or more embodiments is not particularly limited, but may be, for example, about 10 µm to about 18 µm, about 11 µm to about 16 µm, or about 12 µm to about 15 µm. As used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image for positive electrode active materials. If the average particle diameter of the positive electrode active material satisfies the above range, high capacity and long cycle-life can be realized and it can be advantageous to form a coating layer according to one or more embodiments. Also, in the present disclosure, when the particles are spherical, "diameter" indicates a particle diameter or an average particle diameter, and when the particles are non-spherical, the "diameter" indicates a major axis length or an average major axis length.

The cobalt content (e.g., amount) in the positive electrode active material according to one or more embodiments may be, for example, less than or equal to about 0.01 mol%, less than or equal to about 0.005 mol%, or less than or equal to about 0.001 mol%, for example, about 0 mol% to about 0.01 mol%, about 0 mol% to about 0.005 mol%, or about 0 mol% to about 0.001 mol% based on 100 mol% of a total metal excluding lithium in the layered lithium nickel-manganese-based composite oxide.

Additionally, in one or more embodiments, another positive electrode active material may not contain sodium. In general, sodium ions can be used in the preparing process of a positive electrode active material, but according to the method of preparation described in more detail later, core particles with a stable structure and a coating layer of substantially uniform thickness can be formed without using sodium ions.

### Method of Preparing Positive Electrode Active Material

In one or more embodiments, a method of preparing a positive electrode active material includes (i) preparing core particles including a layered lithium nickel-manganese-based composite oxide; (ii) adding and mixing an aluminium raw material and a zinc raw material to an aqueous solvent to prepare a coating solution; (iii) adding and mixing the core particles to the coating solution to prepare a mixed solution; and (iv) removing the aqueous solvent from the mixed solution, drying the resulting product, and performing heat treatment to obtain a positive electrode active material.

In the method of preparing the positive electrode active material according to one or more embodiments, the preparing of core particles including the layered lithium nickel-manganese-based composite oxide includes mixing a nickel-manganese-based composite hydroxide and a lithium raw material and performing a first heat treatment. The nickel-manganese-based composite hydroxide may be a precursor of core particles, may include (e.g., may be in the form of) secondary particles in which a plurality of primary particles are agglomerated, may not contain cobalt or may contain a very small amount, and may be, for example, cobalt-free nickel-manganese-based composite hydroxide. The nickel-manganese-based composite hydroxide may be prepared by a general co-precipitation method.

The nickel content (e.g., amount) may be greater than or equal to about 60 mol% and for example, about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal in the nickel-manganese-based composite hydroxide. If the nickel content (e.g., amount) satisfies the ranges, high capacity may be achieved and structural stability may be increased even if the cobalt content (e.g., amount) is reduced.

The manganese content (e.g., amount) may be greater than or equal to about 10 mol%, for example about 10 mol% to about 40 mol%, about 15 mol% to about 35 mol%, about 15 mol% to about 30 mol%, or about 20 mol% to about 30% based on 100 mol% of a total metal in the nickel-manganese-based composite hydroxide. If the manganese content (e.g., amount) of the nickel-manganese-based composite hydroxide satisfies the above range, high capacity may be realized while structural stability of the positive electrode active material may be increased, and production price may be lowered to increase economic efficiency.

In addition, if (e.g., when) the nickel-manganese-based composite hydroxide further contains aluminium, the aluminium content (e.g., amount) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol%, based on 100 mol% of a total metal in the nickel-manganese-based composite hydroxide.

If the aluminium content (e.g., amount) of the composite hydroxide satisfies the above ranges, high capacity may be realized while structural stability of the positive electrode active material may be increased, and production price may be lowered to increase economic efficiency.

In a method for preparing a positive electrode active material according to one or more embodiments, in the preparation of core particles, aluminium is not additionally doped, but an aluminium raw material may be used to prepare a precursor, so that a nickel-manganese-aluminium-based composite hydroxide, in which aluminium is uniformly (e.g., substantially uniformly) dispersed in the structure, may be used as the precursor. When such a precursor is used, the positive electrode active material may stably maintain a layered structure without cobalt despite repeated charges and discharges, and aluminium by-products or aluminium aggregates may not be formed, improving capacity and efficiency characteristics and cycle-life characteristics of the positive electrode active material.

In the nickel-manganese-based composite hydroxide, the cobalt content (e.g., amount) may be less than or equal to about 0.01 mol%, less than or equal to about 0.005 mol%, or less than or equal to about 0.001 mol%, for example about 0 mol% to about 0.01 mol%, about 0 mol% to about 0.005 mol%, or about 0 mol% to about 0.001 mol% based on 100 mol% of a total metal in the nickel-manganese-based composite hydroxide. This nickel-manganese-based composite hydroxide may be economical as it avoids the increase in unit cost caused by cobalt, maximizes capacity, and improves structural stability.

For example, the nickel-manganese-based composite hydroxide may be represented by Chemical Formula 2:

Chemical Formula 2 Niₓ₂Mn_{y2}Al_{z2}M²_{w2}(OH)₂

In Chemical Formula 2, 0.6≤x2≤0.8, 0.1≤y2≤0.4 0≤z2≤0.03, 0≤w2≤0.3, and 0.9≤x2+y2+z2+w2≤1.1, and M² is one or more elements selected from among B, Ba, Ca, Ce, Cr, Fe, Mg, Mo, Nb, Si, Sn, Sr, Ti, V, W, Y, Zr, and Zn.

In Chemical Formula 2, for example, 0.6≤x2≤0.8, 0.1≤y2≤0.39, 0.01≤z2≤ 0.03, and 0≤w2≤0.29.

The nickel-manganese-based composite hydroxide may be in the form of particles, and the average particle diameter (D₅₀) of the particles may be about 10 µm to about 18 µm, about 11 µm to about 16 µm, or about 12 µm to about 15 µm.

The nickel-manganese-based composite hydroxide and lithium raw material may be mixed in a molar ratio of about 1:0.9 to about 1:1.8, for example, about 1:0.9 to about 1:1.5 or about 1:1 to about 1:1.2.

The first heat treatment may be performed under an oxygen atmosphere, for example, within a temperature range of about 750 °C to about 950 °C, about 780 °C to about 900 °C, or about 810 °C to about 890 °C for about 2 hours to about 20 hours or about 4 hours to about 12 hours.

The layered lithium nickel-manganese-based composite oxide may be obtained through the first heat treatment. In the obtained layered lithium nickel-manganese-based composite oxide, based on 100 mol% of a total metal excluding lithium in the layered lithium nickel-manganese-based composite oxide, the nickel content (e.g., amount) may be about 60 mol% to about 80 mol%, the manganese content (e.g., amount) may be greater than or equal to about 10 mol%, the aluminium content (e.g., amount) may be about 0 mol% to about 3 mol%, and cobalt may be contained in a very small amount of about 0 mol% to about 0.01 mol%. Because a layered lithium nickel-manganese-based composite oxide may have significantly different residual lithium contents on the particle surface and different one or more suitable characteristics from oxides with a different composition, for example, lithium nickel-cobalt-manganese-based composite oxide, lithium nickel-cobalt-aluminium-based composite oxide, lithium cobalt-based oxide, and/or the like, it is impossible to form a satisfactory coating layer in the form of a substantially uniform film in a coating method used in the art. In one or more embodiments, a method of coating the surface of a layered lithium nickel-manganese-based composite oxide particle with aluminium and zinc at a very substantially uniform thickness is proposed.

In one or more embodiments, a coating solution is first prepared by adding an aluminium raw material and a zinc raw material to an aqueous solvent, core particles including the layered lithium nickel-manganese-based composite oxide obtained through a first heat treatment are added and mixed, and then drying and a second heat treatment are performed to form a coating layer according to one or more embodiments. This is a salt-dissolution wet coating method and can be referred to as a pre-addition method in which the salt, which is the coating raw material, is first completely dissolved and then the core particles of the positive active material particles are added.

The aqueous solvent may include distilled water, alcohol-based solvent, and/or a (e.g., any suitable) combination thereof. For example, the aluminium raw material may be aluminium sulfate. The aluminium sulfate may be referred to as an optimal or suitable raw material for forming a substantially uniform coating layer containing aluminium on layered lithium nickel-manganese-based composite oxide. The zinc raw material may be zinc sulfate, zinc nitrate, and/or a (e.g., any suitable) combination thereof.

The aluminium content (e.g., amount) in the aluminium raw material may be designed to be about 0.5 mol% to about 1.5 mol%, for example about 0.5 mol% to about 1.4 mol%, about 0.6 mol% to about 1.4 mol%, or about 0.7 mol% to about 1.3 mol% based on 100 mol% of a total metal excluding lithium in the core particles, aluminium of the aluminium raw material, and zinc of the zinc raw material. If the aluminium coating content (e.g., amount) is designed within the above ranges, the coating layer may be formed to have a thin and substantially uniform thickness of tens to hundreds of nanometers, reducing an amount of gas generated by rechargeable lithium batteries under high-voltage or high-temperature operation conditions and improving high-capacity and long cycle-life characteristics.

The zinc content (e.g., amount) in the zinc raw material may be designed to be about 0.01 mol% to about 1.5 mol%, for example about 0.05 mol% to about 1.0 mol%, about 0.1 mol% to about 1.0 mol%, about 0.1 mol% to about 0.5 mol%, or about 0.1 mol% to about 0.4 mol% based on 100 mol% of a total metal excluding lithium in the core particles, aluminium of the aluminium raw material, and zinc of the zinc raw material. If the zinc coating content (e.g., amount) is designed within the above ranges, the coating layer may be formed to have a thin thickness of tens to hundreds of nanometers and a substantially uniform thickness, improving cycle-life characteristics under high-voltage or high-temperature operation conditions and increasing the initial charge and discharge efficiency.

The adding and mixing of the aluminium raw material and zinc raw material into an aqueous solvent may proceed for about 1 minute to about 60 minutes, for example, about 3 minutes to about 30 minutes, or about 5 minutes to about 10 minutes. Additionally, the mixing speed may be about 100 rpm to about 800 rpm, for example, about 200 rpm to about 600 rpm, or about 250 rpm to about 500 rpm. Under these conditions, the aluminium raw material and zinc raw material are dissolved (e.g., completely dissolved) in the aqueous solvent to obtain a colorless transparent coating solution, and this coating solution may be used to effectively form the substantially uniform coating layer according to one or more embodiments. The pH of the mixed coating solution may be, for example, about 1.5 to about 4, for example, about 2.0 to about 3.5, about 2.5 to about 3.3, about 2.7 to about 3.3, or about 2.9 to about 3.2.

In the adding of the core particles to the prepared coating solution, while stirring the coating solution, the core particles are added thereto to increase coating quality.

In addition, the time taken to add the core particles to the coating solution may be about 30 seconds/about 500 g to about 2 minutes/about 500 g, for example, about 30 seconds/about 500 g to about 1.5 minutes/about 500 g, and/or the like. The speed of adding the core particles may be appropriately or suitably adjusted to control pH of a supernatant after completing the coating, inducing effective formation of the substantially uniform coating layer according to one or more embodiments. If the speed of adding core particles is too slow, the reaction rate for each particle may vary and a substantially uniform coating layer may not be formed. Additionally, if the speed at which core particles are added is too fast, the pH may change quickly and a substantially uniform coating layer may not be formed.

After the core particles are all added to the coating solution, the stirring may be performed for about 15 minutes to about 60 minutes, for example, about 20 minutes to about 50 minutes, or about 30 minutes to about 45 minutes. The time taken from starting addition of the core particles to the coating solution to completion of the stirring, for example, the coating reaction time, may be adjusted within about 1 hour.

In one or more embodiments, if (e.g., when) the adding and mixing of the core particles to the coating solution is stopped, the pH of the supernatant after completing the mixing or the coating may be in a range of about 5.5 to about 8.5. If the pH of the supernatant is less than 5.5, the acidity may become strong and a substantially uniform coating layer may not be formed, and if the pH is more than 8.5, the alkalinity may become strong, making it difficult to form a substantially uniform coating layer containing Al.

After removing the aqueous solvent from the mixed solution, a product therefrom may be for example dried at about 40 °C to about 240 °C, about 100 °C to about 220 °C, or about 150 °C to about 200 °C and for example under vacuum conditions, and under these conditions a satisfactory coated product may be obtained.

The dried product after removing the aqueous solvent from the mixed solution may be referred to as a coated product. The coated product includes core particles and a coating layer containing aluminium and zinc on the surface of the core particle. For example, the coating layer containing aluminium and zinc may include a fibre shape (e.g., in a form of fibres), for example, a mesh shape or a spiderweb shape. Such a mesh may be continuously formed over the entire surface of the core particles. The mesh-shaped coating layer may be around (e.g., surround) the core particles with a very thin and substantially uniform thickness to strengthen the surface of the positive electrode active material and improve structural stability and thereby, enhancing high-temperature and high-voltage characteristics.

After mixing the nickel-manganese-based composite hydroxide and the lithium raw material, the heat treatment of the mixture may be referred to as a first heat treatment, while the heat treatment of the coated product may be referred to as a second heat treatment. The second heat treatment may be as a process of forming a coating layer, for example, in an oxygen atmosphere at a temperature range of about 700 °C to about 850 °C, about 750 °C to about 840 °C, or about 800 °C to about 830 °C for about 2 to about 20 hours, or about 3 to about 10 hours. If the second heat treatment temperature is set to the above ranges, the tendency of aluminium to diffuse into the secondary particle may be reduced and it mainly remains on the surface of the secondary particle. At the same time, the surface of the secondary particle can be coated in the form of a very thin and uniformly (e.g., substantially uniformly) thick shell, and zinc can also be well coated on the surface of the secondary particle.

### Positive Electrode

In one or more embodiments, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the aforementioned positive electrode active materials. Additionally, the positive electrode active material layer may optionally further include a binder, a conductive material, and/or a (e.g., any suitable) combination thereof.

According to one or more embodiments, a loading level of the positive electrode active material layer may be about 10 mg/cm² to about 40 mg/cm², for example about 10 mg/cm² to about 30 about mg/cm², or about 10 mg/cm² to about 20 mg/cm². Additionally, a density of the positive electrode active material layer in the final compressed positive electrode may be about 3.3 g/cc to about 3.7 g/cc, for example about 3.3 g/cc to about 3.6 g/cc or about 3.4 g/cc to about 3.58 g/cc. When applying the positive electrode active material according to one or more embodiments, it is advantageous to implement such a loading level and positive electrode density, and a positive electrode that satisfies the loading level and positive electrode density in the above ranges is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

### Conductive Material

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of the positive electrode active material layer.

The positive electrode current collector may include Al foil, but the present disclosure is not limited thereto.

### Rechargeable Lithium Battery

One or more embodiments include a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte .

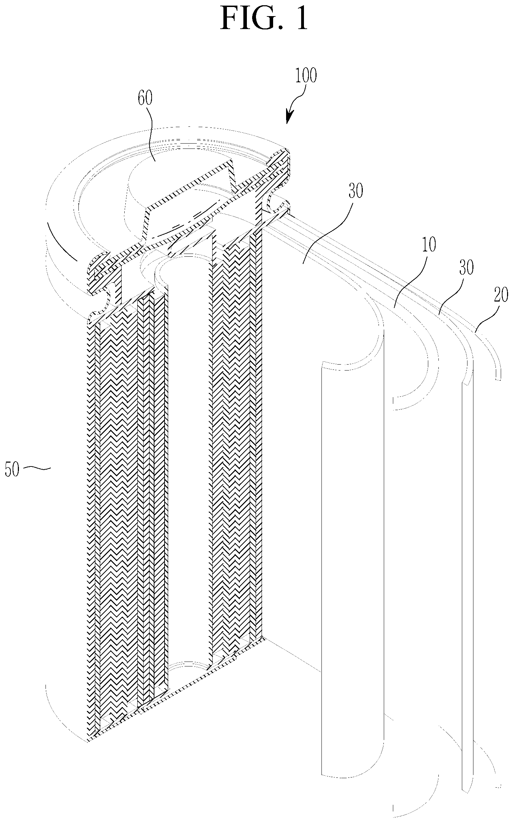

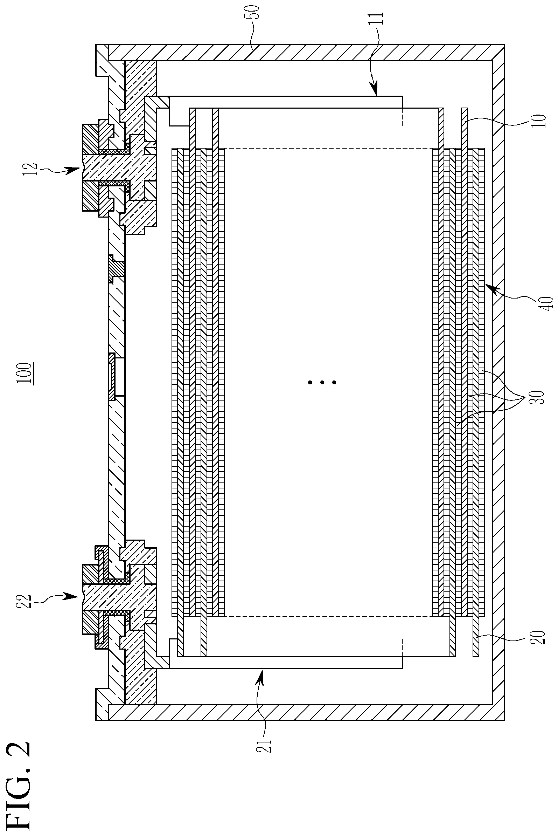

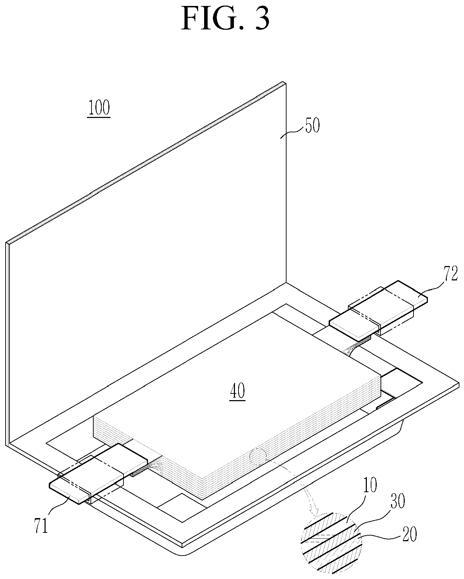

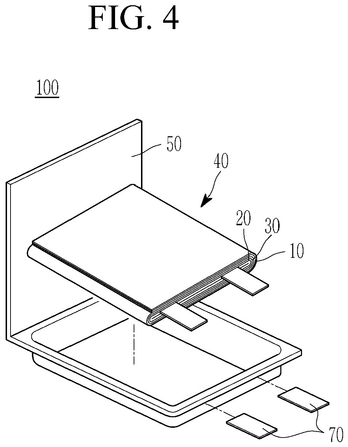

The rechargeable lithium battery may be classified into cylindrical, prismatic, pouch, coin, and/or the like depending on the shape. FIGS. 1 to 4 are schematic diagrams each showing the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte . The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

The rechargeable lithium battery according to one or more embodiments may be rechargeable at a high voltage or may be suitable for being driven at a high voltage. For example, the charging voltage of a rechargeable lithium battery may be greater than or equal to about 4.45 V, about 4.45 V to about 4.7 V, about 4.45 V to about 4.6 V, or about 4.45 V to about 4.55 V, and/or the like. By applying the positive electrode active material according to one or more embodiments, the rechargeable lithium battery can significantly reduce an amount of gas generated even if (e.g., when) charged at high voltage and can achieve high capacity and long cycle-life characteristics.

### Negative Electrode

The negative electrode may include a current collector and a negative electrode active material layer on the current collector, and the negative electrode active material layer may include a negative electrode active material, and may further include a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, and/or a (e.g., any suitable) combination thereof as a carbon-based negative electrode active material. The crystalline carbon may be irregular, or sheet, flake, spherical, or fiber shape (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, SnOₓ (0 < x ≤ 2) (e.g., SnO₂), a Sn alloy, and/or a (e.g., any suitable) combination thereof.

The silicon-carbon composite may be a composite of silicon and amorphous carbon. An average particle diameter (D₅₀) of the silicon-carbon composite particles may be, for example, about 0.5 µm to about 20 µm. According to one or more embodiments, the silicon-carbon composite may include (e.g., may be in the form of) silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

When the silicon-carbon composite includes silicon and amorphous carbon, a content (e.g., amount) of silicon may be about 10 wt% to about 50 wt% and a content (e.g., amount) of amorphous carbon may be about 50 wt% to about 90 wt% based on 100 wt% of the silicon-carbon composite. In addition, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte that includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds), and if (e.g., when) two or more types (kinds) are used in a mixture, a mixing ratio can be appropriately or suitably adjusted according to the desired or suitable battery performance, which is suitable to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinyl ethylene carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAICl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If the concentration of lithium salt is within the above range, the electrolyte has appropriate or suitable ionic conductivity and viscosity, and thus excellent or suitable performance can be achieved and lithium ions can move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof a surface (e.g., on one or both surfaces (e.g., opposite surfaces)) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, or a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described herein. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed in a molar ratio of 1:1.05 and then, the first heat treatment was performed at 845 °C under an oxygen atmosphere for 8 hours to prepare a layered lithium nickel-manganese-based composite oxide in a form of secondary particles having a composition of LiNi_{0.75}Mn_{0.23}Al_{0.02}O₂ and an average particle diameter (D₅₀) of about 14 µm.

A coating solution was prepared by adding aluminium sulfate and zinc sulfate with 600 g of distilled water to a 1 L reactor and then, stirring the mixture at about 350 rpm for about 5 minutes to dissolve the salts. As the salts were completely dissolved, the coating solution was checked to be colorless and transparent. Subsequently, 500 g of the layered lithium nickel-manganese-based composite oxide was added to the coating solution, which was being stirred, for 1.5 minutes and then, kept being stirred for about 30 minutes. Herein, the aluminium sulfate was designed to have an aluminium content (e.g., amount) of 1.0 mol% based on 100 mol% of a total metal excluding lithium in a final positive electrode active material (That is, based on 100 mol% of a total metal excluding lithium in the core particles, aluminum of the aluminum raw material, and zinc of the zinc raw material), while the zinc sulfate was designed to have a zinc content (e.g., amount) of 0.1 mol% based on 100 mol% of the total metal excluding lithium in the final positive electrode active material. After completing the stirring, a supernatant thereof had pH 8.

After removing the solvent from the mixed solution by using an aspirator and filter press, a coated product was obtained through vacuum drying at 190 °C.

The coated product was secondarily heat-treated at 750 °C for 8 hours under an oxygen atmosphere to obtain the final positive electrode active material.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare positive electrode active material layer slurry, the positive electrode active material slurry was coated on an aluminium foil current collector, and then dried and compressed to manufacture a positive electrode. Herein, a loading level of the positive electrode active material layer was 10 mg/cm², and a density of the positive electrode active material layer in the finally compressed positive electrode was about 3.4 g/cc.

97.5 wt% of a graphite negative electrode active material, 1.5 wt% of carboxymethyl cellulose, and 1 wt% of a styrene butadiene rubber was mixed in a water solvent to prepare a negative electrode active material layer slurry. The negative electrode active material layer slurry was coated on a copper foil current collector, dried, and compressed to manufacture a negative electrode.

Subsequently, the positive electrode was used with a lithium metal as a counter electrode and a polytetrafluoroethylene separator, and in addition, an electrolyte prepared by dissolving 1 M LiPF₆ in a mixed solvent of ethylene carbonate and dimethyl carbonate in a volume ratio of 3:7 was used to manufacture a rechargeable lithium battery cell in a common method.

### Example 2

A positive electrode active material and a rechargeable lithium battery cell were manufactured substantially the same manner as in Example 1 except that the zinc sulfate was designed to a zinc content (e.g., amount) of 0.25 mol% based on 100 mol% of the total metal content (e.g., amount) excluding lithium of the final positive electrode active material.

### Example 3

A positive electrode active material and a rechargeable lithium battery cell are manufactured in substantially the same manner as in Example 1 except that the zinc sulfate was designed to have a zinc content (e.g., amount) of 0.05 mol% based on 100 mol% of the total metal content (e.g., amount) excluding lithium of the final positive electrode active material.

### Example 4

A positive electrode active material and a rechargeable lithium battery cell are manufactured in substantially the same manner as in Example 1 except that the zinc sulfate was designed to have a zinc content (e.g., amount) of 0.5 mol% based on 100 mol% of the total metal content (e.g., amount) excluding lithium of the final positive electrode active material.

### Comparative Example 1

A positive electrode active material and a rechargeable lithium battery cell are manufactured in substantially the same manner as in Example 1 except that the LiNi_{0.75}Mn_{0.23}Al_{0.02}O₂ composite oxide itself was used as the positive electrode active material by not adding the aluminium sulfate and the zinc sulfate, that is, without the aluminium and zinc coating.

### Comparative Example 2

A positive electrode active material and a rechargeable lithium battery cell were manufactured in substantially the same manner as in Example 1 except that the positive electrode active material was prepared by using the LiNi_{0.75}Mn_{0.23}Al_{0.02}O₂ composite oxide coated with 1 mol% of aluminium based on 100 mol% of the total metal content (e.g., amount) excluding lithium in the final positive electrode active material by not adding the zinc sulfate without the zinc coating.

### Comparative Example 3

A positive electrode active material and a rechargeable lithium battery cell were manufactured in substantially the same manner as in Example 1 except that the positive electrode active material was prepared by using the LiNi_{0.75}Mn_{0.23}Al_{0.02}O₂ composite oxide coated with 1 mol% of zinc based on 100 mol% of the total metal content (e.g., amount) excluding lithium in the final positive electrode active material by not adding the aluminium sulfate, that is, without the aluminium coating.

### Evaluation Example 1: Surface Analysis of Positive Electrode Active Material

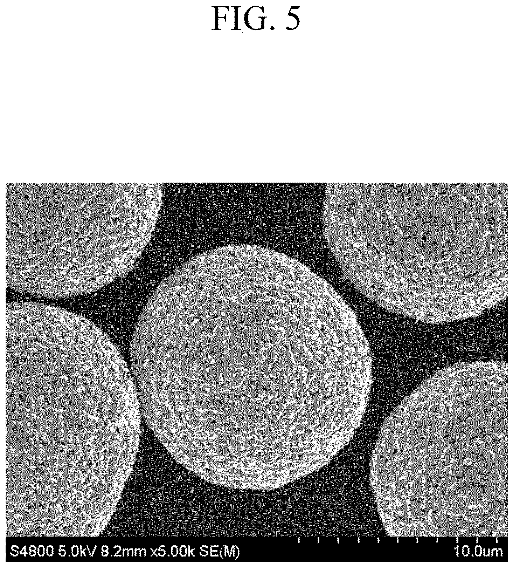

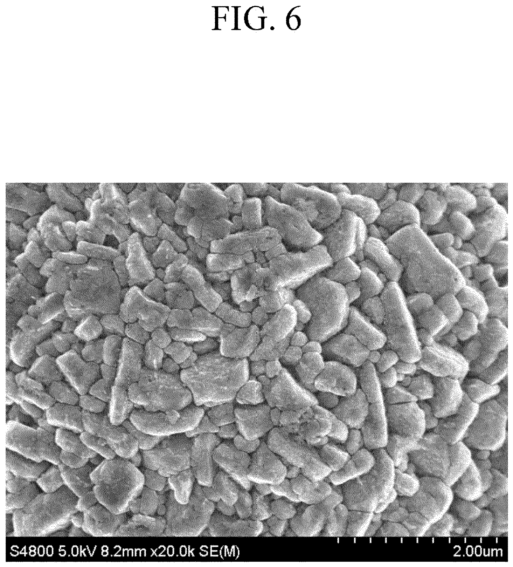

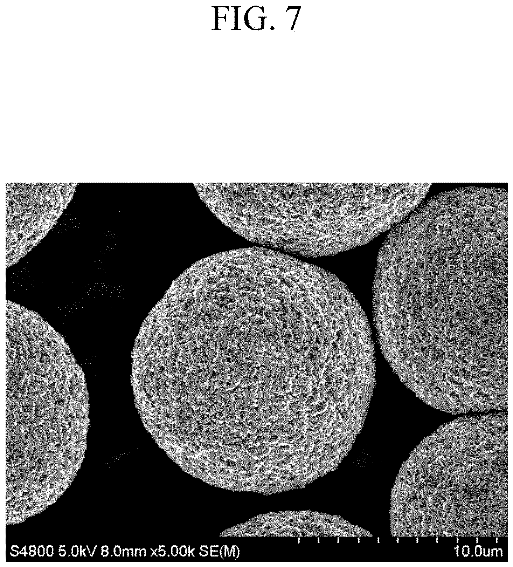

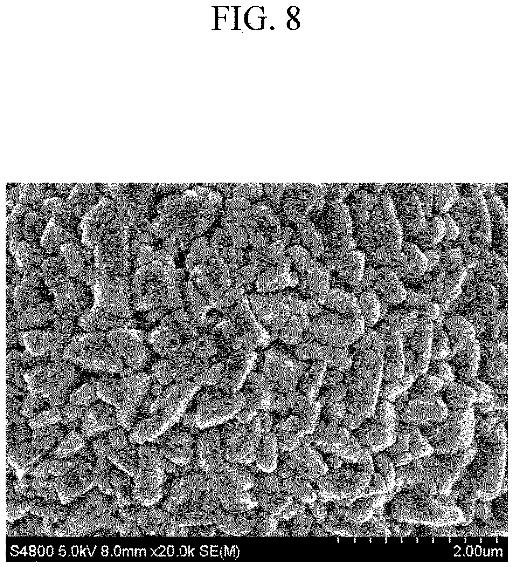

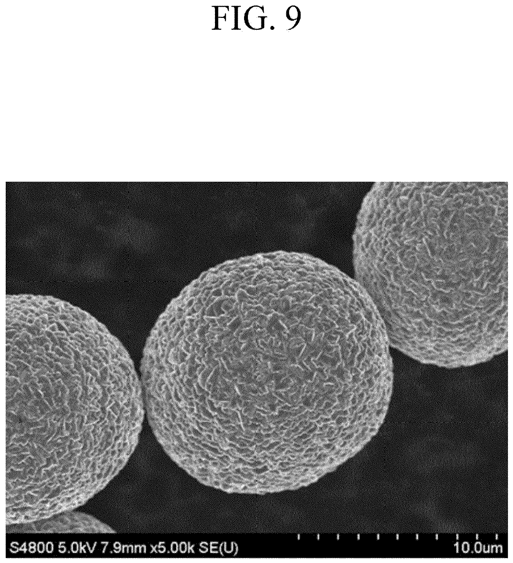

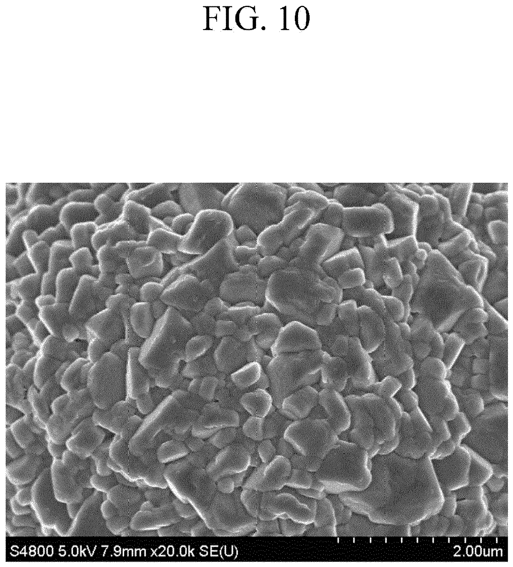

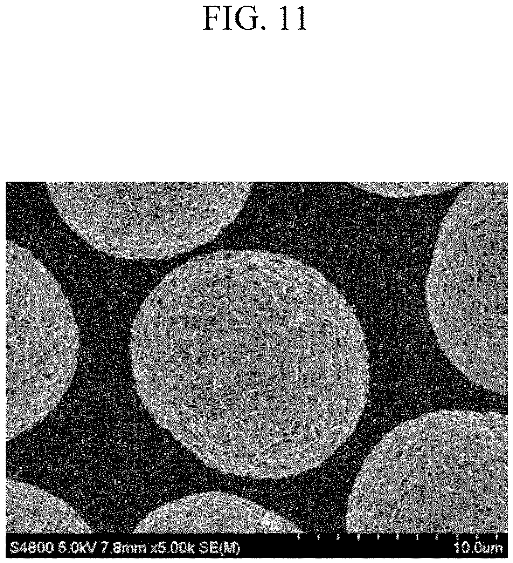

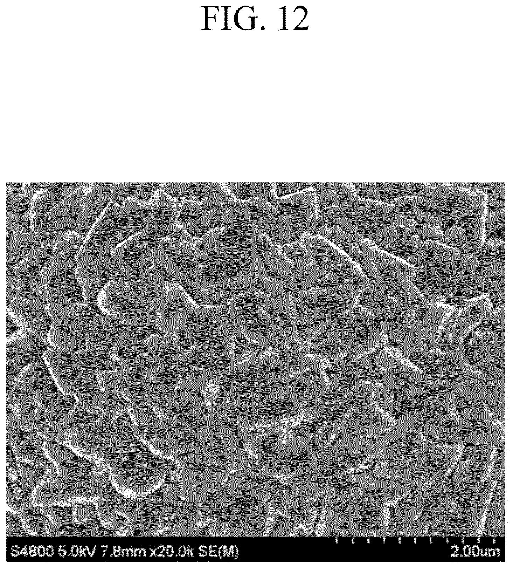

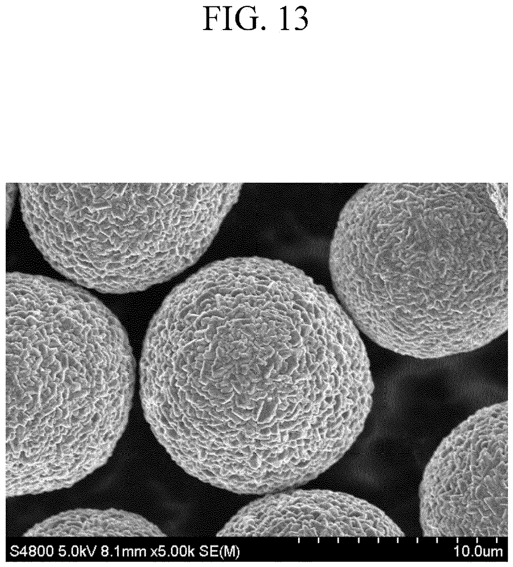

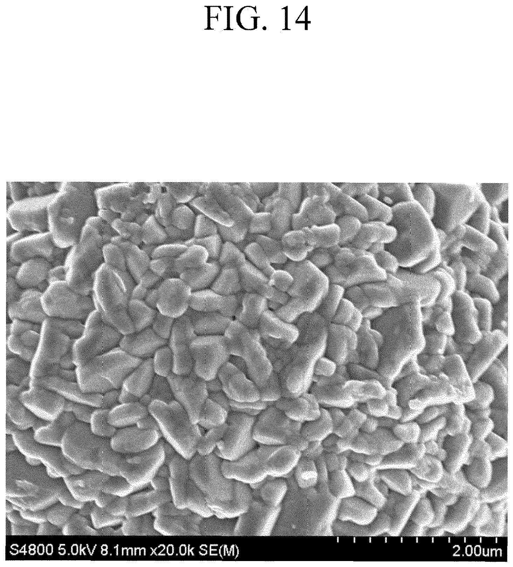

The positive electrode active materials according to Examples 1 to 2 and Comparative Examples 1 to 3 were taken an image of with a scanning electron microscope (SEM). FIG. 5 is an SEM image of the surface of the final positive electrode active material prepared in Example 1, and FIG. 6 is an enlarged image thereof. FIG. 7 is an SEM image of the surface of the final positive electrode active material prepared in Example 2, and FIG. 8 is an enlarged image thereof. FIG. 9 is an SEM image of the surface of the final positive electrode active material manufactured in Comparative Example 1, and FIG. 10 is an enlarged image thereof. FIG. 11 is an SEM image of the surface of the final positive electrode active material prepared in Comparative Example 2, and FIG. 12 is an enlarged image thereof. FIG. 13 is an SEM image of the surface of the final positive electrode active material prepared in Comparative Example 3, and FIG. 14 is an enlarged image thereof. Referring to FIGS. 9 to 14, Comparative Examples 1 to 3 exhibited smooth secondary particle surfaces, but referring to FIGS. 5 to 8, Examples 1 to 2 exhibited an aluminium and zinc coating layer formed on the secondary particle surface.

### Evaluation Example 2: Analysis of Aluminium and Zinc Contents on the Surface of Positive Electrode Active Material

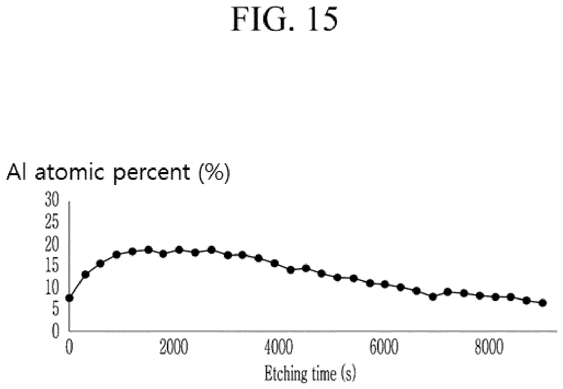

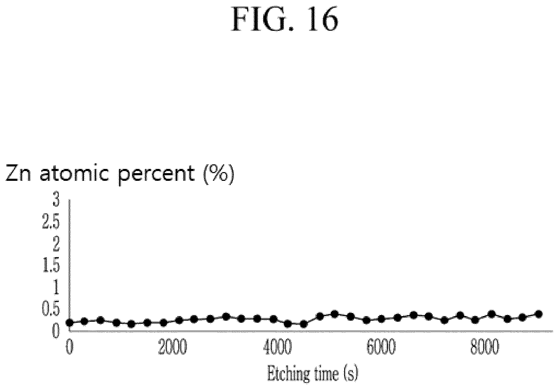

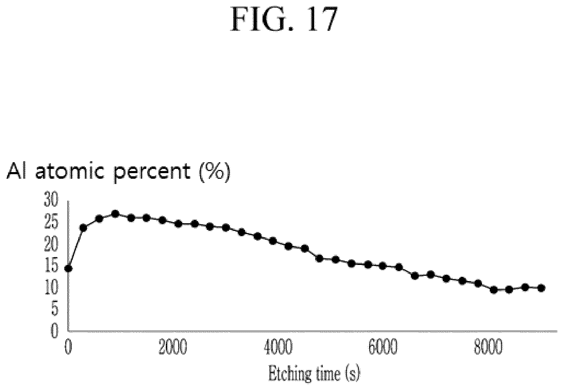

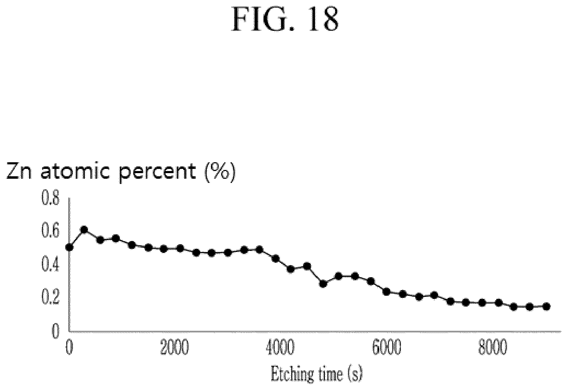

The aluminium and zinc contents on the positive electrode active material surface were checked through a depth profile and peak quantification by XPS, and the results are shown in FIGS. 15 and 16. In addition, the aluminium and zinc contents on the positive electrode active material surface before the second heat treatment were also checked, and the results are shown in FIGS. 17 and 18. The XPS analysis was performed by using an ESCALAB 250Xi XPS Microprobe made by Thermo Fisher Scientific Inc. Herein, the aluminium and zinc contents are values based on 100 of a sum of at% of all the components. Al element profiles and are shown in FIGS 15 and 17. Zn element profiles are shown in FIGS 16 and 18.
- X-ray: Al Ka 1486.6 eV
- Charge neutralization: Low energy ion & electron
- Ar⁺ Gun: 4000 eV
- Ar⁺ Monatomic Gun

Referring to FIGS. 15 and 16, an aluminium concentration decreased from the surface to a bulk within a range of 5 at% to 35 at% though XPS, which confirmed that a coating layer in the form of a film was distributed on the outside. It can be confirmed by the decrease in aluminum concentration as the etching time through sputtering increases. In addition, a zinc concentration was formed within a range of 0.1 at% to 3.0 at%.

Additionally, referring to FIGS. 17 and 18, even if (e.g., when) the active material before the second heat treatment was checked through XPS, the aluminium concentration decreased from the surface to the bulk within a range of 5 at% to 35 at%, which also confirmed that a coating layer in the form of a thin film was distributed on the outside. It can be confirmed by the decrease in aluminum concentration as the etching time through sputtering increases. In addition, the zinc concentration was formed within a range of 0.1 at% to 3.0 at%.

### Evaluation Example 3: Evaluation of Initial Charge/Discharge Capacity and Efficiency

The rechargeable lithium battery cells of Examples 1 to 4 and Comparative Examples 1 to 3 were charged to an upper limit voltage of 4.45 V at a constant current of 0.2 C and to 0.05 C at the constant voltage and then, discharged to a cut-off voltage of 3.0 V at 0.2 C at 25 °C for initial charge and discharge. In Table 1, initial charge capacity (i.e. "0.2 C charge" in Table 1), initial discharge capacity (i.e. "0.2 C discharge" in Table 1), and a ratio of the initial discharge capacity to the initial charge capacity as efficiency (i.e. "Efficiency" in Table 1) are provided.

### Evaluation Example 4: High-temperature Cycle-life Characteristics

After the initial charge and discharge of Evaluation Example 3, the cells were 50 times or more charged at 1.0 C and discharged at 1.0 C within a voltage range of 3.0 V to 4.45 V at 45 °C to calculate a ratio of 50^{th} cycle discharge capacity to the initial discharge capacity as the high-temperature cycle-life, and the results are shown in Table 1.

**Table 1**

| | Al content of coating (mol%) | Zn content of coating (mol%) | 0.2C charge (mAh/g) | 0.2C discharge (mAh/g) | Effici ency (%) | High-temperature cycle-life (%, 45 °C, 50 cyc) |
|---|---|---|---|---|---|---|
| Example 1 | 1.0 | 0.1 | 228.5 | 199.5 | 87.3 | 93.2 |
| Example 2 | 1.0 | 0.25 | 228.4 | 196.1 | 85.9 | 93.5 |
| Example 3 | 1.0 | 0.05 | 229 | 198.8 | 86.8 | 92.5 |
| Example 4 | 1.0 | 0.5 | 227.2 | 191.5 | 84.3 | 90.4 |
| Comparative Example 1 | - | - | 229.8 | 193.3 | 84.1 | 88.4 |
| Comparative Example 2 | 1.0 | - | 229.6 | 195.0 | 84.9 | 92.2 |
| Comparative Example 3 | - | 1.0 | 228.4 | 185.2 | 81.1 | 93.9 |

Referring to Table 1, Examples 1 and 2 concurrently (e.g., simultaneously) each exhibited high initial charge and discharge capacity, high initial charge and discharge efficiency, and excellent or suitable high-temperature cycle-life characteristics. Example 1, compared to Comparative Example 2 in which aluminium alone in an amount of 1.0 mol% was coated, exhibited all improved initial discharge capacity, initial charge and discharge efficiency, and high-temperature cycle-life characteristics, and Example 2, compared to Comparative Example 2, exhibited all improved initial discharge capacity, initial charge and discharge efficiency, and high-temperature cycle-life characteristics. In addition, Example 1, compared to Comparative Example 3 in which zinc alone in an amount of 1.0 mol% was coated, exhibited improved initial discharge capacity and initial charge/discharge efficiency, and Example 2, compared to Comparative Example 3, exhibited improved initial discharge capacity and initial charge/discharge efficiency.

Comparative Example 1, into which an aluminium and zinc coating layer was not introduced, exhibited inferior high-temperature cycle-life characteristics to the examples and slightly deteriorated initial discharge capacity and initial charge/discharge efficiency characteristics, compared to the examples.

In contrast, each of Examples 1 to 3 in which a zinc content (e.g., amount) of a coating layer was in a range of 0.05 mol% to 1.5 mol%, compared to Example 4 in which the zinc content (e.g., amount) was out of the range of 0.1 mol% to 0.4 mol%, exhibited improved initial discharge capacity, initial charge/discharge efficiency, and high-temperature cycle-life characteristics and thereby, improved battery performance.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory, which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this invention has been described in connection with what is presently considered to be practical example embodiments, it is to be understood that present disclosure is not limited to the disclosed embodiments. In contrast, it is intended to cover one or more suitable modifications and equivalent arrangements included within the scope of the appended claims and equivalents thereof.

Embodiments are set out in the following clauses:
Clause 1. A positive electrode active material, comprising: a core particle comprising a lithium nickel-manganese-based composite oxide; and a coating layer on a surface of the core particle and containing aluminium and zinc.
Clause 2. The positive electrode active material of clause 1, wherein in the layered lithium nickel-manganese-based composite oxide, based on 100 mol% of a total metal of the layered lithium nickel-manganese-based composite oxide excluding lithium, a nickel content of the layered lithium nickel-manganese-based oxide is about 60 mol% to about 80 mol% and a manganese content of the layered lithium nickel-manganese-based composite oxide is greater than or equal to about 10 mol%.
Clause 3. The positive electrode active material of clause 1 or clause 2, wherein the layered lithium nickel-manganese-based composite oxide further comprises aluminium, and an aluminium content of the layered lithium nickel-manganese-based composite oxide is about 1 mol% to about 3 mol% based on 100 mol% of a total metal of the layered lithium nickel-manganese-based composite oxide excluding lithium.
Clause 4. The positive electrode active material of clause 3, wherein a concentration of aluminium in the core particle is uniform.
Clause 5. The positive electrode active material of any one of the preceding clauses, wherein in the layered lithium nickel-manganese-based composite oxide, the cobalt content of the layered lithium nickel-manganese-based composite oxide is about 0 mol% to about 0.01 mol% based on 100 mol% of a total metal of the layered lithium nickel-manganese-based composite oxide excluding lithium.
Clause 6. The positive electrode active material of any one of the preceding clauses, wherein the layered lithium nickel-manganese-based composite oxide is represented by Chemical Formula 1:

   Chemical Formula 1 Liₐ₁Niₓ₁Mn_{y1}Al_{z1}M¹w₁O_{2-b1}X_{b1}

   wherein in Chemical Formula 1, 0.9≤a1 ≤1.8, 0.6≤x1≤0.8, 0.1≤y1≤0.4, 0≤z1≤0.03, 0≤ w1≤0.3, 0.9≤x1+y1+z1+w1≤1.1, and 0≤b1≤0.1, M¹ is one or more elements selected from among Al, B, Ba, Ca, Ce, Cr, Fe, Mg, Mo, Nb, Si, Sn, Sr, Ti, V, W, Zr, and Zn, and X is one or more elements selected from among F, P, and S.
Clause 7. The positive electrode active material of any one of the preceding clauses, wherein an aluminium content of the coating layer is about 5 at% to about 35 at% based on 100 at% of total components of the coating layer on the surface of the positive electrode active material measured by XPS (X-ray photoelectron spectroscopy) and a zinc content of the coating layer is about 0.1 at% to about 3.0 at% based on 100 at% of the total components of the coating layer on the surface of the positive electrode active material measured by XPS.
Clause 8. The positive electrode active material of any one of the preceding clauses, wherein an aluminium content of the coating layer is about 0.5 mol% to about 1.5 mol% based on 100 mol% of a total metal of the coating layer excluding lithium and a zinc content of the coating layer is about 0.01 mol% to about 1.5 mol% based on 100 mol% of the total metal of the coating layer excluding lithium.
Clause 9. The positive electrode active material of any one of the preceding clauses, wherein a ratio (Al/Zn) of the aluminium content to the zinc content on the surface of the positive electrode active material is about 2 to about 50.
Clause 10. The positive electrode active material of any one of the preceding clauses, wherein the coating layer comprises a shell that continuously surrounds the surface of the core particle.
Clause 11. The positive electrode active material of any one of the preceding clauses, wherein a thickness of the coating layer is about 5 nm to about 200 nm.
Clause 12. The positive electrode active material of any one of the preceding clauses, wherein a deviation of a thickness of the coating layer within one positive electrode active material particle is less than or equal to about 20 %.
Clause 13. A method comprising: preparing core particles comprising a layered lithium nickel-manganese-based composite oxide; adding and mixing an aluminium raw material and a zinc raw material to an aqueous solvent to prepare a coating solution; adding and mixing the core particles to the coating solution to prepare a mixed solution; removing the aqueous solvent from the mixed solution; drying the resulting product; and performing a heat treatment to obtain a positive electrode active material, wherein the method is a method of preparing a positive electrode active material.
Clause 14. The method of clause 13, wherein an aluminium content of the aluminium raw material is about 0.5 mol% to about 1.5 mol%, and a zinc content of the zinc raw material is about 0.1 mol% to about 0.4 mol% based on 100 mol% of a total metal excluding lithium in the core particles, aluminium of the aluminium raw material, and zinc of the zinc raw material.
Clause 15. The method of clause 13 or clause 14, wherein the aluminium raw material is aluminium sulfate, and the zinc raw material is zinc sulfate, zinc nitrate, or a combination thereof.
Clause 16. The method of any one of clauses 13 to 15, wherein the heat treatment is performed within a temperature range of about 700 °C to about 850 °C.
Clause 17. A positive electrode, comprising: a positive electrode current collector, and a positive electrode active material layer on the positive electrode current collector, wherein the positive electrode active material layer comprises the positive electrode active material of any one of clauses 1 to 12.
Clause 18. The positive electrode of clause 17, wherein the positive electrode active material layer has a loading level of about 10 mg/cm² to about 40 mg/cm².
Clause 19. The positive electrode of clause 17 or clause 18, wherein the positive electrode active material layer has a density of about 3.3 g/cc to about 3.7 g/cc.
Clause 20. A rechargeable lithium battery, comprising: the positive electrode of any one of clauses 17 to 19; a negative electrode; and an electrolyte.
Clause 21. The rechargeable lithium battery of clause 20, wherein a charging voltage of the rechargeable lithium battery is greater than or equal to about 4.45V.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising
a core particle comprising a layered lithium nickel-manganese-based composite oxide; and
a coating layer on a surface of the core particle and containing aluminium and zinc.

2. The positive electrode active material as claimed in claim 1, wherein
in the layered lithium nickel-manganese-based composite oxide, based on 100 mol% of a total metal of the layered lithium nickel-manganese-based composite oxide excluding lithium, a nickel content of the layered lithium nickel-manganese-based oxide is about 60 mol% to about 80 mol% and a manganese content of the layered lithium nickel-manganese-based composite oxide is greater than or equal to about 10 mol%.

3. The positive electrode active material as claimed in claim 1 or claim 2, wherein
the layered lithium nickel-manganese-based composite oxide further comprises aluminium, and an aluminium content of the layered lithium nickel-manganese-based composite oxide is about 1 mol% to about 3 mol% based on 100 mol% of a total metal of the layered lithium nickel-manganese-based composite oxide excluding lithium,
optionally wherein
a concentration of aluminium in the core particle is uniform.

4. The positive electrode active material as claimed in any one of the preceding claims, wherein
in the layered lithium nickel-manganese-based composite oxide, the cobalt content of the layered lithium nickel-manganese-based composite oxide is about 0 mol% to about 0.01 mol% based on 100 mol% of a total metal of the layered lithium nickel-manganese-based composite oxide excluding lithium.

5. The positive electrode active material as claimed in any one of the preceding claims, wherein
the layered lithium nickel-manganese-based composite oxide is represented by Chemical Formula 1:
Chemical Formula 1 Liₐ₁Niₓ₁Mn_{y1}Al_{z1}M¹w₁O_{2-b1}X_{b1}
wherein in Chemical Formula 1, 0.9≤a1 ≤1.8, 0.6≤x1≤0.8, 0.1≤y1≤0.4, 0≤z1≤ 0.03, 0≤w1≤0.3, 0.9≤x1+y1+z1+w1≤1.1, and 0≤b1≤0.1, M¹ is one or more elements selected from among B, Ba, Ca, Ce, Cr, Fe, Mg, Mo, Nb, Si, Sn, Sr, Ti, V, W, Y, Zr, and Zn, and X is one or more elements selected from among F, P, and S.

6. The positive electrode active material as claimed in any one of the preceding claims, wherein
an aluminium content is about 5 at% to about 35 at% based on 100 at% of total components on the surface of the positive electrode active material measured by XPS and a zinc content of the coating layer is about 0.1 at% to about 3.0 at% based on 100 at% of the total components of the coating layer on the surface of the positive electrode active material measured by XPS, and/or
an aluminium content of the coating layer is about 0.5 mol% to about 1.5 mol% based on 100 mol% of a total metal of the coating layer excluding lithium and a zinc content of the coating layer is about 0.01 mol% to about 1.5 mol% based on 100 mol% of the total metal of the coating layer excluding lithium.

7. The positive electrode active material as claimed in any one of the preceding claims, wherein
a mole ratio (Al/Zn) of the aluminium content to the zinc content on the surface of the positive electrode active material is about 2 to about 50, and/or
the coating layer comprises a shell that continuously surrounds the surface of the core particle, and/or
a thickness of the coating layer is about 5 nm to about 200 nm, and/or
a deviation of a thickness of the coating layer within one positive electrode active material particle is less than or equal to about 20 %.

8. A method comprising:
preparing core particles comprising a layered lithium nickel-manganese-based composite oxide;
adding and mixing an aluminium raw material and a zinc raw material to an aqueous solvent to prepare a coating solution;
adding and mixing the core particles to the coating solution to prepare a mixed solution;
removing the aqueous solvent from the mixed solution;
drying the resulting product; and
performing a heat treatment to obtain a positive electrode active material,
wherein the method is a method of preparing a positive electrode active material.

9. The method as claimed in claim 8, wherein
an aluminium content of the aluminium raw material is about 0.5 mol% to about 1.5 mol%, and a zinc content of the zinc raw material is about 0.05 mol% to about 1.5 mol% based on 100 mol% of a total metal excluding lithium in the core particles, aluminium of the aluminium raw material, and zinc of the zinc raw material.

10. The method as claimed in claim 8 or claim 9, wherein
the aluminium raw material is aluminium sulfate, and
the zinc raw material is zinc sulfate, zinc nitrate, or a combination thereof.

11. The method as claimed in any one of claims 8 to 10, wherein
the heat treatment is performed within a temperature range of about 700 °C to about 850 °C.

12. A positive electrode, comprising
a positive electrode current collector, and
a positive electrode active material layer on the positive electrode current collector,
wherein the positive electrode active material layer comprises the positive electrode active material as claimed in any one of claims 1 to 7.

13. The positive electrode as claimed in claim 12, wherein
the positive electrode active material layer has a loading level of about 10 mg/cm² to about 40 mg/cm², and/or
the positive electrode active material layer has a density of about 3.3 g/cc to about 3.7 g/cc.

14. A rechargeable lithium battery, comprising
the positive electrode as claimed in claim 12 or claim 13;
a negative electrode; and
an electrolyte.

15. The rechargeable lithium battery as claimed in claim 14, wherein
a charging voltage of the rechargeable lithium battery is greater than or equal to about 4.45V.
